# EUROPEAN PATENT APPLICATION

(11) **EP 1 190 620 A1**
(43) Date of publication of application: **27.03.2002**
(21) Application number: 01203616.6
(22) Date of filing: 25.09.2001
(51) Int. Cl.: A01G 9/14, A01G 31/02

(54) **Cultivation system**

(30) Priority: 25.09.2000 NL 1016265
(71) Applicant: W/M Systems B.V., 2587 TX Den Haag (NL)
(72) Inventor: Jansen, Wilhelmus Henricus Antonius, 1619 BZ Andijk (NL)
(74) Representative: Jorritsma, Ruurd

(57) **Abstract**

Cultivation system consisting of a support (2) for accommodating the related plants therein or thereon. The support (2), which in general is constructed in the shape of a trough, is suspended from the roof construction of a greenhouse or the like with the aid of frames (3) arranged some distance away. The frames (3) are so constructed that a conveyor belt (7) construction can be arranged below the supports (2). Such a conveyor belt (7) is supported by the the same supports (2) and is likewise suspended from the roof of the greenhouse concerned or the like. like.

## Description

The present invention relates to a cultivation system comprising a support, accommodated in a frame, for holding pots, substrate and the like.

A cultivation system of this type is disclosed in NL-C 1 007 448. With this system a trough or other support is suspended via frames from the roof construction of a greenhouse or the like. Such systems are used, for example, when cultivating tomatoes, strawberries and other plants. With these systems the distance between the frame and the roof construction during cultivation can be fixed or modified. A wide variety of advantages are obtained with such cultivation systems, in which context in particular the improved accessibility, both for the personnel in the greenhouse and for light on the plants, is of great importance.

After the product concerned has grown sufficiently it is harvested. This is generally carried out by pickers removing the relevant product from the plant and transferring it to a so-called tube rail cart. After this has been filled, it is moved to a central location and the contents thereof are tipped onto a conveyor belt which, for example, goes to a sorting and/or packing station. Movement of the tube rail cart is laborious. Moreover, it requires appreciable space in the greenhouse and requires the presence of (heating) pipes. Furthermore, it has been found that the product is frequently damaged when it lands in the cart and when it is tipped onto the conveyor belt. In practice a picker will want to move as little as possible, as a result of which the product is moved (thrown) over an appreciable distance, as a result of which damage can occur to the product concerned, either immediately or later.

In order to solve this problem a conveyor belt construction that is suspended from a frame extending in the longitudinal direction of a greenhouse is proposed in Japanese Patent Application 7-236369. This frame can be moved in the transverse direction of the greenhouse along cross-members installed at high level in the greenhouse. In this way the entire floor area of the greenhouse can be covered with a single conveyor belt. The belt can optionally be removed and sprinkler installations and the like fitted in it's stead. It is essential that this construction is above the plants. Combination with the construction described above, where hanging supports are fitted to the greenhouse construction, is not possible. After all, the suspension construction for the supports would be struck when the conveyor belt was moved.

The aim of the invention is to avoid the disadvantages described above and to provide an efficient conveyor system for a greenhouse or the like.

This aim is realised with a cultivation system as described above in that said frame is constructed to support a conveyor belt and guide means for said conveyor belt are provided beneath said support.

According to the present invention a conveyor belt is used which is also supported by the frames in which the supports are accommodated. That is to say, without structural further measures it is possible to provide a conveyor system which is close to the cultivation. Preferably, the conveyor belt is arranged below the support concerned, so that no light is taken away and movement of the picked product to the conveyor belt can be carried out in a simple manner.

In a greenhouse a number of series of supports will generally be suspended alongside one another. It is possible to provide each support with a conveyor belt located beneath it, but according to an advantageous embodiment of the invention such a conveyor belt is not present for each support. After all, it is no problem at all for the picker to transfer the product from a support to the adjoining support, located closest alongside it, under which adjacent support the conveyor belt described above is present. The number of conveyor belts can be appreciably reduced by this means.

The conveyor belt or conveyor belt construction can comprise any structure known in the art. Preferably, however, this is constructed as a single channel in which a belt is accommodated. Surprisingly, it has been found that long lengths of conveyor belt can be achieved without the use of rollers or other guide means, without the drive power and the loading on the belt being excessive. According to an advantageous embodiment of the invention, such a channel has a lowered central section and two raised adjoining sections. The drive for conveyor belt can be provided in any manner known in the art. According to an advantageous embodiment of the invention, the drive is provided by the use of two rollers clamping the conveyor belt between them, at least one of said rollers being driven. By this means the conveyor belt is pulled along the transport channel and it is not necessary for the conveyor belt to be under tension, as in the case of systems with start and end rollers. The slack that is present in the belt can be taken up in the lower part of the construction. One or more guide rollers can optionally be present for this purpose.

According to a further advantageous embodiment of the invention, the frame is furthermore provided with suspension means for water and/or heating systems.

The conveyor belt can be made of any material known in the state of the art. Preferably it consists of a fibre-reinforced plastic material. The characteristics of the belt can be chosen depending on the channel. A width of 25 cm and a maximum loading of 5 kilogram per metre is mentioned by way of example. It has been found that particularly long lengths of conveyor belt, such as more than 50 and in particular 100 metres, can be produced with such a channel. The electric motor used can have a power of less than a half hp.

With a system of this type it is not only possible to move products more efficiently to a conveyor belt or other conveyor device at the end of the relevant conveyor belt according to the invention without the risk of damage to the harvested product, but it is also possible to harvest more rapidly. After all, no staff are needed for the first movement of the products. Consequently it is possible to harvest depending on the market price, that is to say to carry out harvesting on that day on which the highest yield is anticipated.

It will be understood that any other conveyor system known in the state of the art can be arranged at the end of the conveyor belt according to the invention.

The invention will be explained in more detail below with reference to an illustrative embodiment shown in the drawing. Here:
Fig. 1 shows, diagrammatically, a perspective view of a cultivation system according to the invention; and
Fig. 2 shows the end of a cultivation system according to the invention in cross-section.

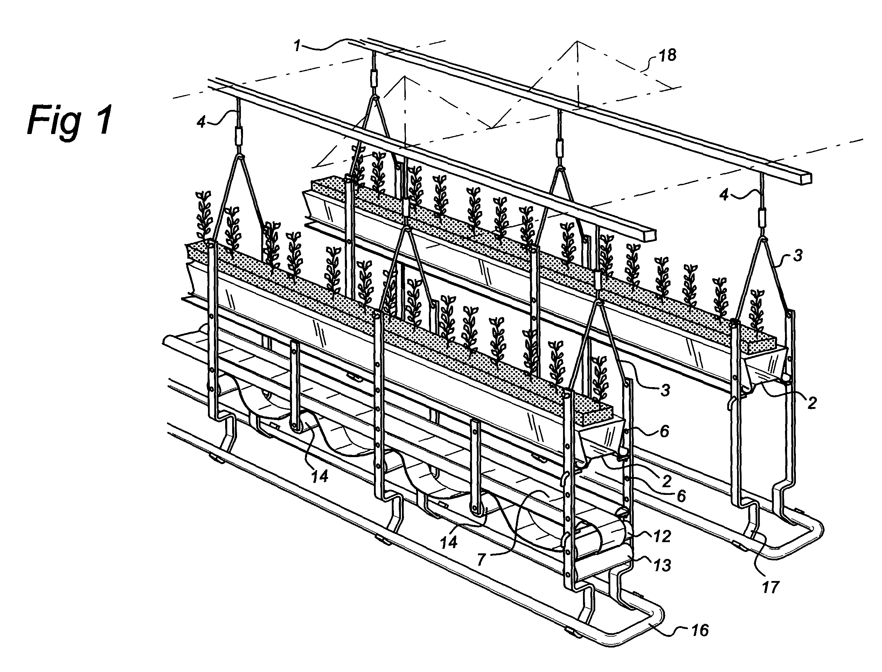

In Fig. 1 a greenhouse is indicated highly diagrammatically. This is provided with a roof construction 18 that bears on the ground via columns which are not shown. A number of suspension cables 4 are arranged on longitudinal beams 1 fixed to the roof construction 18, which suspension cables 4 are, in turn, fixed to frames 3 arranged a regular distance apart. These frames function as the support for troughs 2. These troughs can either be filled with some substrate material or function for placing pots and the like thereon.

Such a cultivation system is generally known in the state of the art.

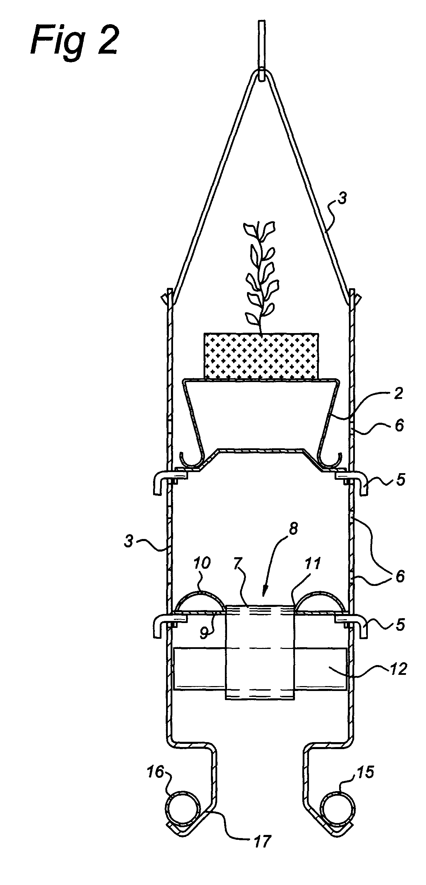

According to the invention it is proposed to construct at least a few of the frames 3 in such a way that these are or can be provided with a conveyor system. To this end the frame is extended towards the bottom in order to accommodate a channel 8 in which conveyor belt 7 is fitted. The various features are shown in more detail in Fig. 2. It can be seen from this figure that the channel 8 is provided with a base 9 having a lowered central section 11 and raised sections 10. The channel can be made of any metallic material known in the state of the art and may or may not be provided with a coating. The abovementioned conveyor belt 7 extends along this channel. The conveyor belt 7 can be made of any plastic material known in the state of the art and can have a particularly long length in order, for example, to produce a conveyor belt with a length of 80 metres or more. The belt is centred by the upright edges of the channel 8. That is to say, no additional guide systems are needed for the positioning thereof.

The channel 8, like the cultivation trough 2, can be fixed to frame 3 with the aid of pins 5. These pins 5 pass through keyhole openings 6 and, as can be seen from Fig. 2, various height positions are possible for both the trough and channel.

The frame 3 is provided close to the bottom with rests 17 that have been bent in the shape of a hook to accommodate a water pipe 15 and heating pipe 16.

Close to the end of the channel 8 there is a drive/return system for the conveyor belt 7. Reversal is realised with a driven roller 12. As a result of the presence of a drive roller 13, which is driven in a manner not shown in more detail, the belt 7 is clamped between these rollers 12 and 13. As a result it is not necessary to clamp the belt 7 tightly between the front and rear ends. The belt can be fitted with considerable play and the slack is taken up in the lower part. Guide rollers 14 are present to prevent this lower part hanging down too far. The end shown in Fig. 1 emerges at a central conveyor system by means of which the harvest can be fed to a sorting and/or packaging machine in the conventional manner.

With the construction described above it is no longer necessary to move through greenhouses with carts.

As can be seen from Fig. 1, not every frame 3 has to be provided with a conveyor system. It is easily possible for the picker to place the crop originating from the cultivation trough 2 shown furthest on the right on conveyor belt 7 that is suspended below the cultivation trough on the left. As a result of dispensing with the movement of carts, the working conditions for the personnel are appreciably improved. Furthermore, damage to the harvested product is no longer a concern, whilst the necessary labour costs are lower. Moreover, it is possible to harvest a specific section of the greenhouse very quickly and effectively without this giving rise to logistical problems.

A belt with a conveyor length of 60 - 120 metres is mentioned by way of example. The width of such a belt is 24 cm and it has been found that with a channel constructed in accordance with the invention a drive power of 0.37 kW is sufficient for a length of 100 metres and a loading capacity of 300 kg.

The weight of the construction described above is relatively restricted, so that no stringent requirements have to be placed on the support construction for the frames. Furthermore, it is not necessary to provide each frame with a fixing for the transport channel concerned. Such fixings can, for example, be provided turn and turn about. As a result of the long length of the channel, the latter can, moreover, serve as an intermediate store for the harvested products.

It will be understood that the construction described above can be implemented in a wide variety of other ways. On reading the above description, variants which are obvious after the above and fall within the scope of the appended claims will be immediately apparent to those skilled in the art.

## Claims

1. Cultivation system comprising a support (2), accommodated in a frame (3), for holding pots, substrate and the like, **characterised in that** said frame is constructed to support a conveyor belt (7) and guide means for said conveyor belt are provided beneath said support.

2. Cultivation system according to Claim 1, wherein said guide means comprise a channel construction (8).

3. Cultivation system according to Claim 2, wherein said channel construction is fixed to said frame.

4. Cultivation system according to one of the preceding claims, wherein said frame has a frame section provided with suspension means for fixing to a roof construction.

5. Cultivation system according to Claim 3 or 4, wherein said channel construction (8) is arranged such that its height is adjustable with respect to said frame.

6. Cultivation system according to one of the preceding claims in combination with Claim 3, wherein in cross-section said channel construction (8) has a lowered central section (11) delimited by elevations (10) on either side.

7. Cultivation system according to one of the preceding claims, wherein said conveyor belt is made of a fabric-reinforced plastic material.

8. Cultivation system according to one of the preceding claims, wherein said frame is provided with support means (17) for pipes (15, 16).

9. System comprising a support (2) accommodated in a number of frames, wherein at least a few frames (3) are constructed to support a conveyor belt, a drive motor for said conveyor belt being present close to one of said frames and said conveyor belt having a length of at least 30 metres.

10. System according to Claim 9, wherein one end of said conveyor belt has two clamping rollers (12, 13) for accommodating said belt clamped between them, at least one of said clamping rollers (12) being driven.
